# DEMANDE DE BREVET EUROPEEN

(11) **EP 2 196 393 A1**
(43) Date de publication de la demande: **16.06.2010**
(21) Numéro de dépôt: 09178815.8
(22) Date de dépôt: 11.12.2009
(51) Int. Cl.: B64D 15/12

(54) **Système d'antigivrage/ dégivrage, son procédé de fabrication et structure d'aéronef l'incorporant.**

(30) Priorité: 11.12.2008 FR 0806959
(71) Demandeur: HUTCHINSON, 75008 Paris (FR)
(72) Inventeur: Ténèbre, Pauline, 70250 Ronchamp (FR); Dieudonne, Marie, 45120, CHALETTE SUR LOING (FR); Ross, Colin, CAMBRIDGE, Cambridgeshire CB22 5AN (GB)
(74) Mandataire: Bolinches, Michel Jean-Marie

(57) **Abrégé**

La présente invention concerne un système d'antigivrage/dégivrage (13) d'une surface externe (11) d'une structure susceptible d'être givrée, telle qu'une voilure ou une nacelle d'aéronef, un procédé de fabrication de ce système et une telle structure l'incorporant.

Ce système d'antigivrage/ dégivrage comprend une couche interne (14) thermiquement isolante, une couche intermédiaire métallique (15) qui la recouvre et qui est destinée à être connectée à des moyens d'alimentation électrique de sorte à former une résistance chauffante, et une couche externe (16) électriquement isolante et thermiquement conductrice qui recouvre la couche métallique, cette couche métallique étant obtenue par un dépôt sous vide d'au moins un métal sur un substrat défini par la couche interne ou par la couche externe.

Selon l'invention, cette couche métallique déposée sous vide présente une épaisseur uniformément comprise entre 0,1 µm et 10 µm et une résistivité de surface comprise entre 0,04 et 4 Ohms par carré, de sorte que ce système présente notamment une inertie thermique minimisée et une densité de puissance surfacique optimisée.

## Description

La présente invention concerne un système d'antigivrage/ dégivrage d'une surface externe d'une structure susceptible d'être givrée, telle qu'une voilure ou une nacelle d'aéronef, un procédé de fabrication de ce système et une telle structure l'incorporant. L'invention s'applique en particulier à des structures de type ailes d'avion, hélices, pales d'hélicoptère ou entrées d'air moteur, à titre non limitatif.

De manière connue, on évalue lors de la conception de systèmes d'antigivrage/ dégivrage de type électrothermique pour aéronefs la densité de puissance surfacique des éléments chauffants ainsi que la superficie de la structure devant être chauffée par ces éléments. Ces derniers sont alimentés en courant par des générateurs équipant l'aéronef, étant précisé que l'on utilise en général pour de gros avions des tensions de 115 ou 230 V en courant alternatif, ou de 270 V en courant continu. Pour une superficie, une densité de puissance surfacique et une tension d'alimentation données, on peut calculer la résistance de la couche d'éléments chauffants, en relation avec un matériau chauffant ayant une résistivité de surface déterminée ou étroitement contrôlée qui varie typiquement de 0,04 à 4 Ohms par carré (« Ohms per square » en anglais, i.e. quotient de la résistivité volumique par l'épaisseur considérée).

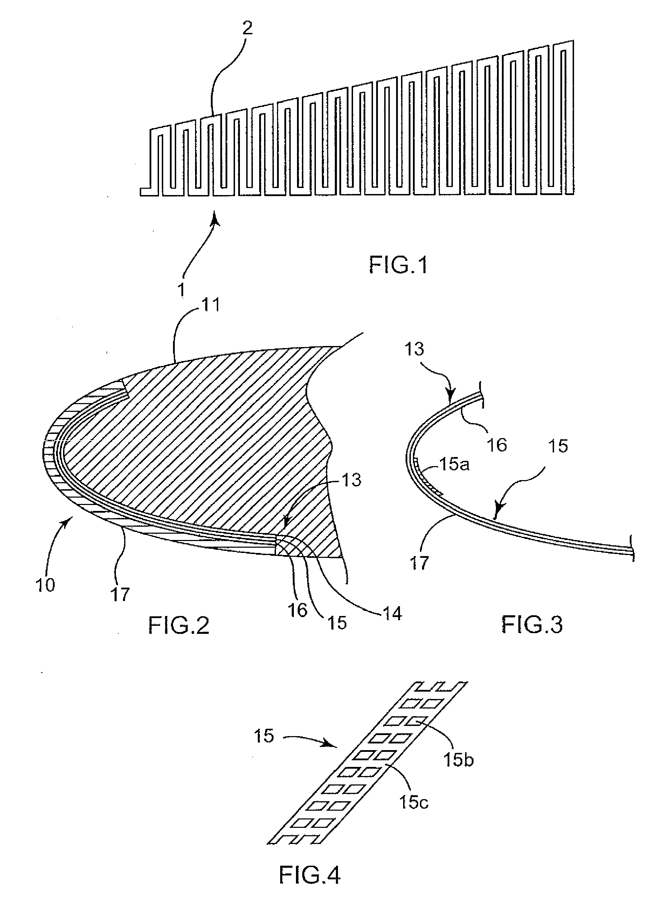

Une première famille de résistances chauffantes utilisées dans ces systèmes d'antigivrage/ dégivrage est illustré à la figure 1 ci-jointe, étant formée d'une feuille métallique dont l'épaisseur varie usuellement de 25 µm à 200 µm et qui est découpée en forme de serpentin 1 à circonvolutions 2 complexes et étudiées pour l'obtention d'une résistivité de surface donnée. Un inconvénient de ces résistances chauffantes est qu'elles impliquent un coût de fabrication élevé en raison de la précision requise lors de l'opération de découpage. D'autres inconvénients de ces résistances résident dans la non-uniformité qui caractérise le chauffage obtenu, ainsi que dans une inertie thermique relativement élevée du serpentin due à son épaisseur importante.

Une seconde famille de résistances chauffantes utilisées dans ces systèmes d'antigivrage/ dégivrage est par exemple présentée dans le document WO-A1-2007/107713, qui divulgue une couche chauffante d'au moins 25 µm d'épaisseur formée de gouttes métalliques (e.g. de cuivre) qui sont pulvérisées avec un courant d'air comprimé à la surface d'une couche interne poreuse de renforcement, tel qu'un tissu de verre, et qui sont recouvertes d'une couche externe à base d'une résine composite thermodurcissable. La couche chauffante obtenue via cette pulvérisation sous pression présente une multitude de petits disques métalliques à surfaces de contact réduites, ce qui engendre un vieillissement et une fatigue prématurés de cette couche en utilisation et des variations importantes de la résistance obtenue en fonction des conditions extérieures.

Un autre inconvénient de cette seconde famille de résistances chauffantes est qu'il est difficile d'obtenir une épaisseur uniforme pour la couche métallique, que la pulvérisation sous pression soit réalisée manuellement ou par un pulvérisateur automatique, à moins d'augmenter sensiblement cette épaisseur en réduisant la résistivité de surface de cette couche, ce qui tend à augmenter la capacité calorifique et donc l'inertie thermique de celle-ci et pénalise finalement le rendement du système.

Un but de la présente invention est de proposer un système d'antigivrage/ dégivrage d'une surface externe d'une structure susceptible d'être givrée, telle qu'une voilure ou une nacelle d'aéronef, qui remédie aux inconvénients précités, ce système comprenant une couche interne thermiquement isolante, une couche intermédiaire métallique qui la recouvre et qui est destinée à être connectée à des moyens d'alimentation électrique de sorte à former une résistance chauffante, et une couche externe électriquement isolante et thermiquement conductrice qui recouvre la couche métallique, cette couche métallique étant obtenue par un dépôt sous vide d'au moins un métal sur un substrat défini par ladite couche interne ou par ladite couche externe.

A cet effet, un système d'antigivrage et/ou de dégivrage selon l'invention est tel que cette couche métallique déposée sous vide présente une épaisseur uniformément comprise entre 0,1 µm et 10 µm et une résistivité de surface comprise entre 0,04 et 4 Ohms par carré, de sorte que ce système présente notamment une inertie thermique minimisée et une densité de puissance surfacique optimisée et soit apte à équiper une voilure ou une nacelle d'aéronef formant ladite structure.

On notera que l'utilisation de ce dépôt sous vide pour l'obtention de la couche métallique, qui peut être avantageusement un dépôt physique en phase vapeur (« PVD ») mis en oeuvre par pulvérisation ou par évaporation ou à la limite un dépôt chimique en phase vapeur (« CVD »), permet d'une manière surprenante d'obtenir une épaisseur à la fois uniforme et très inférieure à celles des couches métalliques obtenues dans l'art antérieur par pulvérisation sous pression d'air, et que ce contrôle précis de l'épaisseur minimisée qui est obtenue pour la résistance chauffante permet d'atteindre des valeurs de résistivité de surface variant dans la plage précitée.

Avantageusement, cette couche métallique peut présenter une épaisseur uniformément comprise entre 0,1 µm et 5 µm et, de préférence, comprise entre 0,5 µm et 1,5 µm.

En effet, cette technique de dépôt sous vide de la couche métallique permet de réduire uniformément l'épaisseur de celle-ci à des valeurs très faibles proches de 1 µm, l'épaisseur précisément obtenue dépendant en fait également du matériau métallique utilisé pour ce dépôt.

On notera que le matériau métallique choisi doit posséder une résistivité volumique qui assure l'obtention de la résistivité de surface souhaitée en relation avec cette faible épaisseur de couche.

De préférence, ledit métal ou lesdits métaux est ou sont choisis dans le groupe constitué par le cuivre, le nickel, le tantale, le niobium, le titane, le platine, le chrome et leurs alliages. A titre encore plus préférentiel, ladite couche métallique est à base de cuivre ou d'un alliage cuivre-nickel, tel que le constantan, l'alliage étant notamment choisi pour ajuster la résistivité ou le coefficient de température de résistance (« TCR ») de la couche métallique.

Avantageusement, la couche métallique peut présenter un coefficient de température de résistance qui est inférieur à 385. 10⁻⁶ Ohms/Ohm/K et, de préférence, inférieur à 192. 10⁻⁶ Ohms/Ohm/K, dans un domaine de températures allant de -40° C à +90° C.

En d'autres termes, la variation avec la température de la résistance de la couche métallique est choisie très faible (de préférence inférieure à 5 % voire à 2,5 %), de sorte que la puissance dissipée par cette couche ne varie pratiquement pas dans ce domaine de températures susceptibles d'être rencontrées par la structure.

A titre non limitatif, on peut par exemple utiliser des alliages de nickel et de cuivre (e.g du constantan) pour l'obtention de coefficients de température de résistance proches de 0 Ohm/Ohm/K, bien que ces alliages ne soient pas d'utilisation aisée.

De préférence, la couche interne présente une épaisseur moyenne comprise entre 100 µm et 2000 µm et à titre encore plus préférentiel comprise entre 400 µm et 600 µm, et elle est traversée par des connecteurs reliant les moyens d'alimentation électrique à la couche métallique.

Si la conductivité thermique de cette couche interne doit être aussi faible que possible et en particulier inférieure à celle de la couche externe, on notera que cette couche interne peut ne pas être un isolant électrique au même titre que la couche externe. La tension de claquage minimale de cette couche interne peut être typiquement comprise entre 1 kV et 3 kV. L'épaisseur de cette couche interne sera déterminée plus en fonction des exigences d'isolation thermique que d'isolation électrique, ce qui autorise une tension de claquage potentiellement supérieure à ces valeurs.

On notera également que cette couche interne peut être en outre conçue pour reprendre les tolérances de fabrication et pour absorber les déformations de la structure en ne transmettant pas ces déformations à la couche métallique, de sorte à éviter tout phénomène de délamination et à ne pas transmettre les vibrations à la structure (en particulier dans le cas de pales d'hélicoptère). Pour l'obtention de cette résilience vis-à-vis des chocs ou impacts, la couche interne peut être avantageusement à base d'au moins un élastomère réticulé de type isolant à la fois thermique et électrique, tel qu'un polychloroprène.

Concernant la couche externe du système selon l'invention, elle peut avantageusement présenter une épaisseur comprise entre 6 µm et 175 µm et, de préférence, entre 25 µm et 75 µm.

La couche externe est en effet choisie aussi fine que possible pour optimiser le transfert thermique vers la surface à chauffer et minimiser la capacité calorifique et donc l'inertie thermique de l'ensemble. Le matériau de cette couche est ainsi choisi pour présenter une rigidité diélectrique et une conductivité thermique élevées, et au contraire une capacité calorifique réduite. Cette couche externe présente avantageusement une tension de claquage comprise entre 1 kV et 30 kV et une conductivité thermique comprise entre 0,1 et 2 W.m⁻¹K⁻¹.

Selon un premier mode de réalisation de l'invention, la couche externe est dépourvue de tout revêtement la surmontant dans ce système, étant destinée à former la surface extérieure de ladite structure, cette couche externe étant constituée d'un film polymérique qui est rapporté par collage ou adhérisation interfaciale sur ladite couche métallique ou qui sert de substrat pour le dépôt de cette dernière.

On notera que dans ce premier mode, la couche externe peut être elle-même conçue pour protéger de l'érosion les couches sous-jacentes et notamment la couche métallique, en utilisation.

Selon un second mode de réalisation de l'invention, la couche externe est surmontée d'un revêtement de protection de préférence métallique apte à protéger le système de l'érosion à laquelle est soumise ladite structure, cette couche externe étant au choix :
- constituée d'un film polymérique collé sous ce revêtement, ce film étant rapporté par collage ou adhérisation interfaciale sur ladite couche métallique ou bien servant de substrat pour le dépôt de cette dernière, ou bien
- directement solidaire de ce revêtement par une formation in *situ* sous et au contact de ce revêtement (i.e. sans collage ni adhérisation interfaciale), de préférence mise en oeuvre par pulvérisation puis évaporation d'une dispersion liquide ou par projection électrostatique suivie dans chaque cas d'une réticulation par voie thermique.

On notera que ce revêtement de protection anti-érosion peut être formé d'une coiffe ou bien de la « peau » métallique de la structure concernée de l'aéronef.

D'une manière générale et en relation avec l'un ou l'autre de ces deux modes, la couche externe peut être à base d'au moins un polymère de type isolant électrique et conducteur thermique, tel qu'un polymère thermoplastique ou thermodurcissable ou bien un élastomère optionnellement chargé de particules destinées à élever sa rigidité diélectrique et/ou sa conductivité thermique (e.g. des particules ou nanoparticules de mica). De préférence, ce polymère est un polymère thermoplastique de haute rigidité diélectrique pouvant être comprise entre 170 kV/mm et 300 kV/mm, et il peut être choisi dans le groupe constitué par les polyétheréthercétones (PEEK), les polyéthercétonecétones (PEKK), les polyimides (PI) et les polyétherimides (PEI).

Dans le cas où la couche interne est formée d'un film polymérique (i.e, selon ledit premier mode ou le premier cas dudit second mode), ce film peut être avantageusement imprégné de colle et d'un tissu relativement fin, tel qu'un tissu de verre, pour faciliter sa manipulation.

D'une manière générale, on notera que les trois couches interne, métallique et externe du système selon l'invention sont de préférence ductiles et non cassantes, pour que ce système puisse endurer de hauts niveaux de microdéformations par exemple sur un rotor d'hélicoptère où ces déformations peuvent varier de 2000 à 10000 µm/m soit de 0,2 % à 1 %.

Selon une autre caractéristique de l'invention, la couche métallique peut former une résistance chauffante de surface continue ou, en variante, de surface discontinue, comprenant dans ce dernier cas une multitude d'éléments chauffants qui sont espacés entre eux par des intervalles électriquement isolants, par exemple à la façon d'une matrice régulière ajourée, et qui sont activables indépendamment les uns des autres par lesdits moyens d'alimentation électrique.

Avantageusement, la couche métallique peut présenter une pluralité de zones chauffantes d'épaisseurs différentes de sorte à faire varier la densité de puissance surfacique à la surface de cette couche métallique, laquelle présente par exemple une largeur allant de 25 mm à 200 mm et une longueur allant de 0,4 m à 7 m.

Selon une autre caractéristique de l'invention, lesdits moyens d'alimentation électrique sont électriquement connectés à ladite couche métallique et peuvent comporter au moins une tresse métallique de commutation à symétrie de révolution présentant une extrémité amont alimentée électriquement et une extrémité aval solidaire de la couche métallique.

Avantageusement, cette tresse peut présenter sensiblement une forme de spatule dont l'extrémité amont est sensiblement circulaire et dont l'extrémité aval est aplatie de manière à présenter une forme oblongue de plus grande dimension égale à la largeur de la ou de chaque zone à chauffer de la couche métallique.

Egalement avantageusement, chacune de ces extrémités de tresse formant les zones de connexion du système selon l'invention sont noyées dans un élastomère, par exemple de type polychloroprène.

Selon un premier exemple de réalisation de l'invention, l'extrémité aval de tresse est solidaire de la couche métallique par l'intermédiaire d'au moins une barrette métallique de connexion collée sur cette couche métallique. En variante, ladite extrémité aval de tresse peut être solidaire de la couche métallique directement par brasage sur une zone épaissie de cette dernière.

Selon un second exemple de réalisation de l'invention, l'extrémité aval de tresse est soudée à un feuillard métallique en une face de ce dernier, l'autre face du feuillard étant pourvue de la barrette de connexion qui est collée sur ladite couche métallique, ce feuillard étant apte à homogénéiser spatialement les densités de courant reçues de la tresse et transmises à la couche métallique.

En relation tant avec ce premier exemple (variante exceptée) que ce second exemple de l'invention, la barrette de connexion peut être collée sur la couche métallique au moyen d'une colle qui est appliquée autour de cette barrette, de préférence une colle électriquement conductrice.

Une structure d'aéronef selon l'invention est susceptible d'être givrée sur sa surface externe, telle qu'une surface de voilure fixe d'avion ou de voilure tournante d'hélicoptère ou une surface de nacelle de moteur d'avion, et elle est **caractérisée en ce qu**'elle intègre un système d'antigivrage/ dégivrage tel que défini ci-dessus.

Un procédé de fabrication selon l'invention d'un système d'antigivrage/ dégivrage tel que celui précité comprend un dépôt sous vide, de préférence un dépôt physique en phase vapeur (« PVD ») par pulvérisation ou par évaporation, d'au moins un métal sur un substrat défini par ladite couche interne ou par ladite couche externe, pour l'obtention de ladite couche métallique formant résistance chauffante et d'épaisseur uniformément comprise entre 0,1 µm et 10 µm.

Selon une autre caractéristique de ce procédé, l'on peut déposer la couche métallique par un dépôt « PVD » mis en oeuvre par pulvérisation d'au moins un métal choisi dans le groupe constitué par le cuivre, le nickel, le tantale, le niobium, le titane, le platine, le chrome et leurs alliages.

Conformément au premier mode précité de l'invention (i.e. sans revêtement de protection pour la couche externe) et dans l'exemple préférentiel où la couche interne est base d'un élastomère réticulé isolant thermique et électrique, ce système peut être obtenu au choix :
(i) en déposant la couche métallique sur ledit film formant la couche externe, en faisant adhérer par collage ou adhérisation interfaciale la couche interne élastomère à la couche métallique ainsi déposée, puis en réticulant cette couche interne, cette méthode (i) étant choisie à titre préférentiel, ou bien
(ii) en déposant la couche métallique sur la couche interne élastomère préalablement réticulée, puis en faisant adhérer par collage ou adhérisation interfaciale le film formant la couche externe à la couche métallique ainsi déposée.

Conformément au second mode précité de réalisation de l'invention (i.e. avec un revêtement de protection pour la couche externe) et toujours avec cette utilisation d'une couche interne élastomère réticulée, le procédé de fabrication de ce système d'antigivrage/ dégivrage comprend, dans le premier cas susmentionné de ce second mode, une étape consistant à coller ledit film formant la couche externe sous ledit revêtement de protection, par exemple au moyen d'une colle époxy.

Selon le premier cas précité de ce second mode, ce procédé peut dans un premier exemple comprendre les étapes successives suivantes :
a) on dépose la couche métallique sur ledit film,
b) on colle le film surmontant la couche métallique sous le revêtement,
c) on fait adhérer par collage ou adhérisation interfaciale la couche interne élastomère à la couche métallique, puis
d) on réticule la couche interne adhérant à l'ensemble obtenu.

Selon une première variante de ce premier cas du second mode, ce procédé peut comprendre les étapes successives suivantes :
a) on colle ledit film sous ledit revêtement,
b) on dépose la couche métallique sous ce film ainsi collé,
c) on fait adhérer par collage ou adhérisation interfaciale la couche interne élastomère à la couche métallique, puis
d) on réticule la couche interne adhérant à l'ensemble obtenu.

Selon une seconde variante de ce premier cas du second mode, ce procédé peut comprendre les étapes successives suivantes :
a) on réticule la couche interne élastomère,
b) on dépose la couche métallique sur cette couche interne,
c) on fait adhérer par collage ou adhérisation interfaciale le film à la couche métallique, puis
d) uniquement dans le cas où ce film n'est pas collé sous le revêtement avant l'étape c), on colle l'ensemble obtenu sous ce dernier.

Selon le second cas précité de ce second mode, ce procédé de fabrication peut par exemple comprendre une étape consistant à former *in situ* la couche externe sous ce revêtement, par pulvérisation puis évaporation d'une dispersion liquide ou par projection électrostatique suivie dans les deux cas d'une réticulation par voie thermique, cette couche externe étant de préférence à base d'au moins un polymère thermoplastique ou thermodurcissable choisi dans le groupe constitué par les polyétheréthercétones (PEEK), les polyéthercétonecétones (PEEK), les polyimides (PI) et les polyétherimides (PEI).

D'autres caractéristiques, avantages et détails de la présente invention ressortiront à la lecture de la description suivante de plusieurs exemples de réalisation de l'invention, donnés à titre illustratif et non limitatif, réalisée en référence avec les dessins joints, parmi lesquels :
la figure 1 est une vue en plan d'une résistance chauffante pour système d'antigivrage/ dégivrage selon l'art antérieur,
la figure 2 est une vue schématique partielle d'une structure de voilure d'aéronef selon un exemple de l'invention, montrant en coupe les diverses couches d'un système d'antigivrage/ dégivrage de l'invention équipant cette structure,
la figure 3 est une vue schématique partielle illustrant en coupe une surépaisseur pouvant être formée dans la résistance chauffante du système de la figure 2 pour faire varier la densité de puissance surfacique de cette résistance,
la figure 4 est une vue schématique en perspective illustrant un exemple de réalisation de la résistance chauffante du système de la figure 2 en forme de matrice d'éléments chauffants indépendants,
la figure 5 est un schéma illustrant le fonctionnement d'une installation de dépôt physique en phase vapeur par pulvérisation, qui est utilisable pour obtenir la résistance chauffante d'un système selon l'invention,
la figure 6 est un schéma illustrant le fonctionnement d'une installation de dépôt physique en phase vapeur par évaporation, utilisable en variante pour obtenir la résistance chauffante d'un système selon l'invention,
la figure 7 est une vue schématique en perspective d'une tresse métallique de commutation utilisable à titre d'exemple pour alimenter électriquement la résistance chauffante d'un système selon l'invention,
la figure 8 est une vue schématique partielle de côté montrant des moyens de connexion, selon un exemple de l'invention, de l'extrémité aval de la tresse de la figure 7 à la résistance chauffante, et
la figure 9 est une vue schématique partielle de côté montrant des moyens de connexion, dans une variante selon l'invention de la figure 8, de cette extrémité aval de la tresse à cette résistance chauffante.

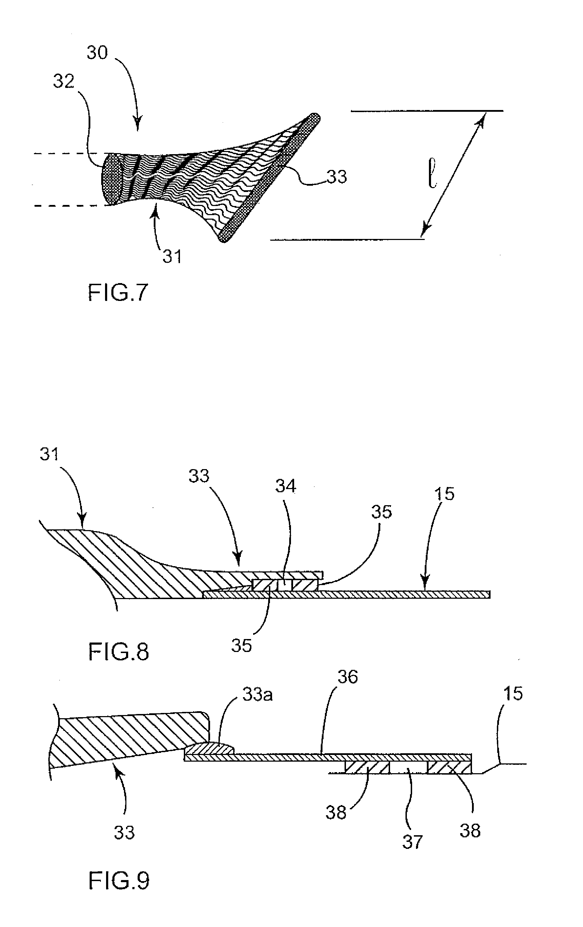

La figure 2 montre un exemple typique de géométrie de zone 10 à prémunir du givrage ou à dégivrer sur une surface externe 11 de structure d'aéronef, telle qu'une aile d'avion ou une pale d'hélicoptère, grâce à un système d'antigivrage/ dégivrage 13 selon l'invention. Cette zone 10 s'étend de part et d'autre sur l'extrados et l'intrados de l'aile, par exemple. Ce système 13 comprend :
- une couche interne 14 thermiquement et électriquement isolante, qui présente par exemple une épaisseur proche de 500 µm et qui est de préférence à base d'un élastomère réticulé, tel qu'un polychloroprène de dénomination commerciale « Neoprène », pour absorber les déformations de la structure en ne les transmettant pas à la fine couche métallique 15 qui la recouvre, de sorte à minimiser les risques de délamination,
- une couche externe 16 électriquement isolante mais thermiquement conductrice, de préférence réalisée en un polymère thermoplastique tel qu'un PEEK, qui recouvre la couche métallique 15 et qui présente par exemple une épaisseur comprise entre 25 et 75 µm, cette couche 16 étant optionnellement protégée par un revêtement métallique de coiffe 17 anti-érosion (qui peut être formé par la « peau » de la structure) et étant formée soit d'un film polymérique, soit d'un dépôt formé in *situ* directement sur la face interne du revêtement 17, et
- la fine couche métallique 15 selon l'invention d'épaisseur uniforme voisine de 1 µm seulement, qui est destinée à être connectée à des moyens d'alimentation électrique 30 (voir figures 7 à 9) de sorte à former la résistance chauffante du système 13, et qui est obtenue par un dépôt métallique sous vide de préférence par « PVD » sur un substrat formé soit par la couche interne 14, soit par la couche externe 16, cette couche 15 étant de préférence constituée de cupronickel ou de cuivre de sorte à présenter un coefficient de température de résistance minimisé.

En d'autres termes et comme visible à la figure 2, la couche interne 14 est la plus éloignée du revêtement de coiffe 17 alors que la couche externe 16 est la plus proche de ce dernier.

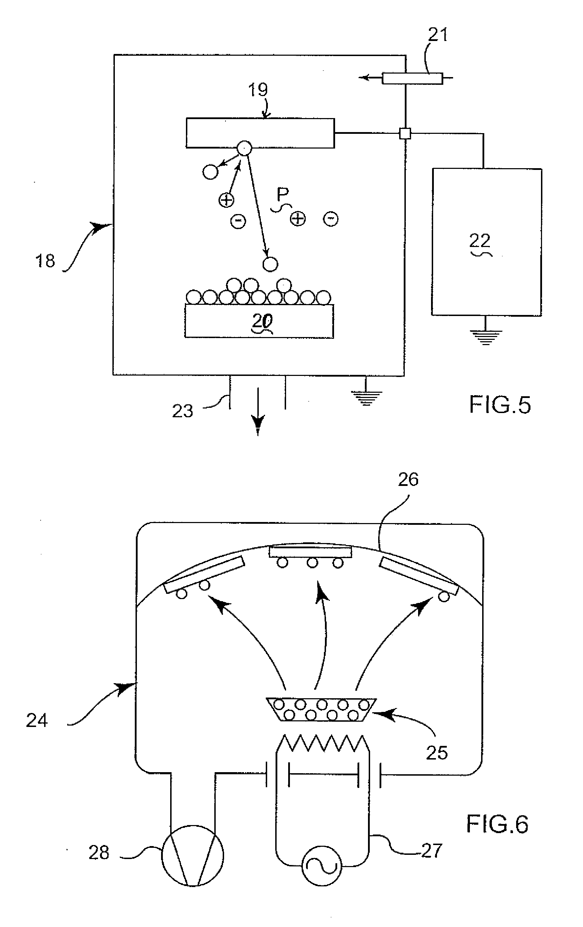

Comme illustré à la figure 5, on peut déposer cette couche métallique 15 par une technique « PVD » mettant en oeuvre une pulvérisation sous vide, dans une chambre 18 à plasma P qui contient la cible 19 à déposer sur le substrat 20 (la cible 19 étant disposée sensiblement parallèlement au substrat 20) et qui est pourvue d'une entrée 21 du gaz à ioniser (tel que de l'argon), d'une unité d'alimentation électrique 22 et d'une pompe à vide 23.

Comme illustré à la figure 6, on peut déposer en variante cette couche métallique 15 par une technique « PVD » mettant en oeuvre une évaporation sous vide, dans une chambre 24 qui contient la cible 25 à déposer sur un substrat 26 en chauffant au préalable le matériau métallique à déposer et qui est équipée d'un circuit de chauffage 27 pour évaporer le dépôt réalisé et d'une pompe à vide 28.

On notera que la technique « PVD » par pulvérisation est préférée à celle par évaporation, du fait qu'elle permet d'obtenir un dépôt d'épaisseur moindre et plus homogène, pouvant être inférieure ou égale à 1 µm (contre 5 µm environ comme épaisseur minimale obtenue par évaporation).

Comme illustré à la figure 3, la couche métallique 15 selon l'invention ainsi déposée sous vide peut présenter une pluralité de zones chauffantes d'épaisseurs différentes en réalisant par exemple plusieurs passes de dépôt « PVD » pour former une surépaisseur 15a, ce « zonage » (« zoning » en anglais) permettant de faire varier la densité de puissance surfacique à la surface de cette couche 15, laquelle présente par exemple une largeur I allant de 25 mm à 200 mm et une longueur allant de 0,4 m à 7 m, comme cela est notamment souhaitable sur les pales de rotor d'hélicoptère où différentes épaisseurs de zones chauffantes peuvent se succéder sur la longueur de chaque pale.

D'une manière générale et comme illustré à la figure 4, la couche métallique 15 peut avantageusement présenter une surface discontinue, formée d'intervalles électriquement isolants, tels que des trous 15b de superficie réduite, qui sont obtenus lors du dépôt sous vide au moyen d'un masque et autour desquels s'étend la résistance chauffante 15c déposée. On obtient ainsi une multitude d'éléments chauffants qui sont espacés entre eux à la façon d'une matrice régulière grillagée, et qui sont activables indépendamment par les moyens d'alimentation électrique 30.

Concernant la couche externe 16, elle est solidarisée avec le revêtement 17 par collage (de préférence via une colle époxy) dans le cas où elle est formée d'un film polymérique rapporté (par exemple en PEEK). Comme cela a été détaillé ci-dessus en référence audit premier cas du second mode de réalisation de l'invention, on peut alors mettre en oeuvre le procédé de fabrication du système 13 selon l'invention selon quatre manière différentes correspondant respectivement audit premier exemple de ce premier cas, à ladite première variante et aux deux possibilités recensées dans ladite seconde variante.

Dans le cas où cette couche 16 est formée *in situ* directement sous le revêtement 17 (i.e. sans colle à l'interface), elle peut être obtenue :
- par pulvérisation au pistolet sur ce revêtement 17 d'une dispersion liquide d'un polymère thermoplastique ou thermodurcissable (e.g. le PEEK précité) dans de l'eau ou un autre solvant aqueux, suivie d'une évaporation du solvant (par exemple à 120° C pendant 5 minutes dans le cas du PEEK) puis d'une cuisson du polymère obtenu (entre 380 et 420° C pendant 10 minutes pour le PEEK) ; ou bien par
- par projection électrostatique sur ce revêtement 17 (sans solvant) suivie d'une cuisson du polymère obtenu (à environ 400° C dans le cas du PEEK).

Dans cette configuration où la couche externe 16 est formée *in situ* sous le revêtement 17, le procédé de fabrication d'un système 13 selon l'invention peut par exemple comprendre les étapes successives suivantes :
a) on forme *in situ* la couche 16 sous le revêtement 17,
b) on dépose la couche 15 sous la couche 16 ainsi obtenue,
c) on fait adhérer par collage ou adhérisation interfaciale la couche interne élastomère 14 à la couche métallique 15 ainsi déposée, puis
d) on réticule la couche 14 adhérant à l'ensemble obtenu.

En variante (toujours dans cette configuration où la couche externe 16 est formée *in situ* sous le revêtement 17), ce procédé selon l'invention peut comprendre les étapes successives suivantes :
a) on réticule la couche interne élastomère 14,
b) on dépose la couche métallique 15 sur la couche 14, puis
c) on fait adhérer par collage ou adhérisation interfaciale la couche métallique 15 ainsi déposée à la couche externe 16, préalablement formée *in situ* sous le revêtement 17.

Comme visible à la figure 7, les moyens d'alimentation électrique 30 peuvent comporter une tresse métallique de commutation 31 (formée de barres conductrices du courant ou « bus bars » en anglais) à symétrie de révolution de grande section transversale, présentant une extrémité amont 32 alimentée électriquement et une extrémité aval 33 solidaire de la couche métallique 15. On a comprimé cette tresse 31 pour lui conférer une forme de spatule dont l'extrémité amont 32 est circulaire et dont l'extrémité aval 33 est aplatie de manière à s'étendre sur toute la largeur I de la ou chaque zone à chauffer de la couche métallique 15. Cette tresse 31 est avantageusement apte à conduire un courant d'intensité pouvant atteindre 100 ampères.

Dans l'exemple de la figure 8, cette extrémité aval 33 est solidaire de la couche 15 par une barrette métallique de connexion 34 solidarisée sous pression avec cette couche 15 via une zone de colle 35 (par exemple électriquement conductrice) entourant cette barrette 34.

Dans l'exemple de la figure 9, l'extrémité 33 est brasée via une ligne de soudure 33a à un feuillard métallique 36 en une face de ce dernier, l'autre face du feuillard 36 étant pourvue d'une barrette de connexion 37 solidarisée sous pression avec la couche 15 via une zone de colle 38 (par exemple électriquement conductrice) entourant également cette barrette 37. Ce feuillard 36 permet d'homogénéiser spatialement les densités de courant reçues de la tresse 31 et transmises à la couche métallique 15, en particulier dans le cas où elles sont très élevées et donc susceptibles de générer un échauffement excessif du système 13.

Selon une variante de la figure 9, on pourrait braser directement le feuillard 36 sur la couche métallique 15 selon l'invention, par exemple par un brasage à l'étain-argent.

On notera que cette tresse 31 et ses moyens de connexion électrique 34, 37 à la couche métallique 15 formant résistance chauffante ne constituent qu'un exemple de réalisation de l'invention parmi d'autres envisageables, et que le système d'antigivrage/ dégivrage 13 selon l'invention pourrait être pourvu de moyens d'alimentation électrique agencés différemment des moyens 30 illustrés, sans pour autant sortir du cadre de l'invention.

## Revendications

1. Système d'antigivrage/ dégivrage (13) d'une surface externe (11) d'une structure susceptible d'être givrée, ce système comprenant une couche interne (14) thermiquement isolante, une couche intermédiaire métallique (15) qui la recouvre et qui est destinée à être connectée à des moyens d'alimentation électrique (30) de sorte à former une résistance chauffante, et une couche externe (16) électriquement isolante et thermiquement conductrice qui recouvre la couche métallique, cette couche métallique étant obtenue par un dépôt sous vide d'au moins un métal sur un substrat défini par ladite couche interne ou par ladite couche externe, **caractérisé en ce que** cette couche métallique déposée sous vide présente une épaisseur uniformément comprise entre 0,1 µm et 10 µm et une résistivité de surface comprise entre 0,04 et 4 Ohms par carré, de sorte que ce système présente une inertie thermique minimisée et une densité de puissance surfacique optimisée et soit apte à équiper une voilure ou une nacelle d'aéronef formant ladite structure.

2. Système d'antigivrage/ dégivrage (13) selon la revendication 1, **caractérisé en ce que** ladite couche métallique (15) présente une épaisseur uniformément comprise entre 0,1 µm et 5 µm et, de préférence, comprise entre 0,5 µm et 1,5 µm, et **en ce que** ladite couche métallique est obtenue par un dépôt physique en phase vapeur (« PVD ») mis en oeuvre par pulvérisation ou par évaporation et présente un coefficient de température de résistance (« TCR ») qui est inférieur à 385. 10⁻⁶ Ohms/Ohm/K et, de préférence, inférieur à 192. 10⁻⁶ Ohms/Ohm/K, dans un domaine de températures allant de -40° C à +90° C.

3. Système d'antigivrage/ dégivrage (13) selon une des revendications précédentes, **caractérisé en ce que** ledit métal ou lesdits métaux est ou sont choisis dans le groupe constitué par le cuivre, le nickel, le tantale, le niobium, le titane, le platine, le chrome et leurs alliages, et **en ce que** de préférence ladite couche métallique (15) est à base de cuivre ou d'un alliage cuivre-nickel, tel que le constantan.

4. Système d'antigivrage/ dégivrage (13) selon une des revendications précédentes, **caractérisé en ce que** ladite couche interne (14) est à base d'au moins un élastomère réticulé de type isolant à la fois thermique et électrique, tel qu'un polychloroprène, et **en ce que** de préférence :
- ladite couche interne (14) présente une épaisseur moyenne comprise entre 100 µm et 2000 µm, cette couche interne étant traversée par des connecteurs (34, 37) reliant lesdits moyens d'alimentation électrique (30) à ladite couche métallique (15), et
- ladite couche externe (16) présente une épaisseur comprise entre 6 µm et 175 µm et de préférence entre 25 µm et 75 µm.

5. Système d'antigivrage/ dégivrage (13) selon une des revendications précédentes, **caractérisé en ce que** ladite couche externe (16) est dépourvue de revêtement (17) la surmontant dans ce système, étant destinée à former la surface extérieure (11) de ladite structure, cette couche externe étant constituée d'un film polymérique qui est rapporté par collage ou adhérisation interfaciale sur ladite couche métallique (15) ou qui sert de substrat pour le dépôt de cette dernière.

6. Système d'antigivrage/ dégivrage (13) selon une des revendications 1 à 4, **caractérisé en ce que** ladite couche externe (16) est surmontée d'un revêtement de protection (17) de préférence métallique apte à protéger le système de l'érosion à laquelle est soumise ladite structure, cette couche externe étant au choix :
- constituée d'un film polymérique collé sous ce revêtement, ce film étant rapporté par collage ou adhérisation interfaciale sur ladite couche métallique (15) ou bien servant de substrat pour le dépôt de cette dernière, ou bien
- directement solidaire de ce revêtement par une formation *in situ* sous et au contact de ce revêtement, de préférence mise en oeuvre par pulvérisation puis évaporation d'une dispersion liquide ou par projection électrostatique suivie dans ces deux cas d'une réticulation par voie thermique.

7. Système d'antigivrage/ dégivrage (13) selon une des revendications précédentes, **caractérisé en ce que** ladite couche externe (16) est à base d'au moins un polymère de type isolant électrique et conducteur thermique, tel qu'un polymère thermoplastique ou thermodurcissable ou bien un élastomère optionnellement chargé de particules destinées à élever sa rigidité diélectrique et/ou sa conductivité thermique, et **en ce que** de préférence ledit polymère est un polymère thermoplastique choisi dans le groupe constitué par les polyétheréthercétones (PEEK), les polyéthercétonecétones (PEKK), les polyimides (PI) et les polyétherimides (PEI).

8. Système d'antigivrage/ dégivrage (13) selon une des revendications précédentes, **caractérisé en ce que** ladite couche métallique (15) forme une résistance chauffante de surface continue ou bien discontinue, comprenant dans ce dernier cas une multitude d'éléments chauffants qui sont espacés entre eux par des intervalles électriquement isolants (15b), par exemple à la façon d'une matrice régulière ajourée, et qui sont activables indépendamment les uns des autres par lesdits moyens d'alimentation électrique (30), et **en ce que** ladite couche métallique (15) présente optionnellement une pluralité de zones chauffantes (15a) d'épaisseurs différentes de sorte à faire varier la densité de puissance surfacique à la surface de cette couche métallique, laquelle présente par exemple une largeur allant de 25 mm à 200 mm et une longueur allant de 0,4 m à 7 m.

9. Système d'antigivrage/ dégivrage (13) selon une des revendications précédentes, **caractérisé en ce que** lesdits moyens d'alimentation électrique (30) sont électriquement connectés à ladite couche métallique (15) et comportent au moins une tresse métallique de commutation (31) à symétrie de révolution présentant une extrémité amont (32) alimentée électriquement et une extrémité aval (33) solidaire de la couche métallique, et **en ce que** de préférence ladite tresse (31) présente sensiblement une forme de spatule dont l'extrémité amont (32) est sensiblement circulaire et dont l'extrémité aval (33) est aplatie de manière à présenter une forme oblongue de plus grande dimension égale à la largeur (I) de la ou de chaque zone à chauffer de la couche métallique (15).

10. Système d'antigivrage/ dégivrage (13) selon la revendication 9, **caractérisé en ce que** ladite extrémité aval (33) de la tresse (31) est solidaire de la couche métallique (15) :
- par l'intermédiaire d'au moins une barrette métallique de connexion (34) collée sur cette couche métallique ou directement par soudage sur une zone épaissie (15a) de cette dernière, ou bien **en ce que**
- cette extrémité aval (33) est soudée à un feuillard métallique (36) en une face de ce dernier, l'autre face du feuillard étant soit pourvue de ladite barrette de connexion (37) qui est collée sur ladite couche métallique (15) soit directement brasée sur cette dernière, ce feuillard étant apte à homogénéiser spatialement les densités de courant reçues de ladite tresse et transmises à la couche métallique.

11. Système d'antigivrage/ dégivrage (13) selon la revendication 10, **caractérisé en ce que** ladite barrette de connexion (34 ou 37) est collée sur ladite couche métallique (15) au moyen d'une colle (35 ou 38) qui est appliquée autour de cette barrette et qui est de préférence une colle électriquement conductrice.

12. Structure d'aéronef susceptible d'être givrée sur sa surface externe (11), telle qu'une surface de voilure fixe d'avion ou de voilure tournante d'hélicoptère ou une surface de nacelle de moteur d'avion, **caractérisée en ce qu'**elle intègre un système d'antigivrage/ dégivrage (13) selon une des revendications précédentes.

13. Procédé de fabrication d'un système d'antigivrage/ dégivrage (13) selon une des revendications 1 à 11, **caractérisé en ce qu'**il comprend un dépôt sous vide, de préférence un dépôt physique en phase vapeur (« PVD ») par pulvérisation ou par évaporation, d'au moins un métal sur un substrat défini par ladite couche interne (14) ou par ladite couche externe (16), pour l'obtention de ladite couche métallique (15) formant résistance chauffante et d'épaisseur uniformément comprise entre 0,1 µm et 10 µm, et **en ce que** de préférence l'on dépose cette couche métallique par un dépôt physique en phase vapeur mis en oeuvre par pulvérisation d'au moins un métal choisi dans le groupe constitué par le cuivre, le nickel, le tantale, le niobium, le titane, le platine, le chrome et leurs alliages.

14. Procédé de fabrication selon la revendication 13, **caractérisé en ce que** ledit système d'antigivrage/ dégivrage (13) est selon les revendications 4 et 5 et est obtenu au choix :
(i) en déposant la couche métallique (15) sur ledit film formant la couche externe (16), en faisant adhérer par collage ou adhérisation interfaciale la couche interne (14) élastomère à la couche métallique (15) ainsi déposée, puis en réticulant cette couche interne, ou bien
(ii) en déposant la couche métallique sur la couche interne élastomère préalablement réticulée, puis en faisant adhérer par collage ou adhérisation interfaciale ledit film formant la couche externe à la couche métallique ainsi déposée.

15. Procédé de fabrication selon la revendication 13, **caractérisé en ce que** ledit système d'antigivrage/ dégivrage (13) est selon les revendications 4 et 6, et **en ce que** ce procédé comprend une étape consistant à coller ledit film formant la couche externe (16) sous ledit revêtement de protection (17), par exemple au moyen d'une colle époxy.

16. Procédé de fabrication selon la revendication 15, **caractérisé en ce qu'**il comprend les étapes successives suivantes :
a) on dépose la couche métallique (15) sur ledit film (16),
b) on colle ce film surmontant la couche métallique sous ledit revêtement (17),
c) on fait adhérer par collage ou adhérisation interfaciale la couche interne élastomère (14) à la couche métallique, puis
d) on réticule la couche interne adhérant à l'ensemble obtenu ; ou bien les étapes suivantes :
a) on colle ledit film (16) sous ledit revêtement (17),
b) on dépose la couche métallique (15) sous ce film ainsi collé,
c) on fait adhérer par collage ou adhérisation interfaciale la couche interne élastomère (14) à la couche métallique, puis
d) on réticule la couche interne adhérant à l'ensemble obtenu ; ou encore les étapes suivantes :
a) on réticule la couche interne élastomère (14),
b) on dépose la couche métallique (15) sur cette couche interne,
c) on fait adhérer par collage ou adhérisation interfaciale ledit film (16) à la couche métallique, puis
d) uniquement dans le cas où ce film n'était pas collé sous le revêtement (17) préalablement à l'étape c), on colle l'ensemble obtenu sous ce revêtement.

17. Procédé de fabrication selon la revendication 13, **caractérisé en ce que** ledit système d'antigivrage/ dégivrage (13) est selon les revendications 4 et 6 et comprend une étape consistant à former in *situ* la couche externe (16) sous ce revêtement (17), par pulvérisation puis évaporation d'une dispersion liquide ou par projection électrostatique suivie dans les deux cas d'une réticulation par voie thermique, cette couche externe étant de préférence à base d'au moins un polymère thermoplastique ou thermodurcissable choisi dans le groupe constitué par les polyétheréthercétones (PEEK), les polyéthercétonecétones (PEEK), les polyimides (PI) et les polyétherimides (PEI), et **en ce que** de préférence il comprend les étapes successives suivantes :
a) on forme *in situ* la couche externe (16) sous ledit revêtement (17),
b) on dépose la couche métallique (15) sous la couche externe ainsi obtenue,
c) on fait adhérer par collage ou adhérisation interfaciale la couche interne élastomère (14) à la couche métallique ainsi déposée, puis
d) on réticule la couche interne adhérant à l'ensemble obtenu ; ou bien les étapes suivantes :
a) on réticule la couche interne élastomère (14),
b) on dépose la couche métallique (15) sur cette couche interne, puis
c) on fait adhérer par collage ou adhérisation interfaciale la couche métallique ainsi déposée à la couche externe (16), préalablement formée *in situ* sous ledit revêtement (17).
